# EUROPEAN PATENT APPLICATION

(11) **EP 2 384 047 A1**
(43) Date of publication of application: **02.11.2011**
(21) Application number: 09837606.4
(22) Date of filing: 28.12.2009
(51) Int. Cl.: H04W 28/04, H04L 1/18

(54) **COMMUNICATION DEVICE AND COMMUNICATION METHOD**

(30) Priority: 08.01.2009 JP 2009002924
(71) Applicant: NTT DOCOMO, INC., Chiyoda-ku Tokyo 100-6150 (JP)
(72) Inventor: GOTO, Yoshikazu, Tokyo 100-6150 (JP); HAYASHI, Takahiro, Tokyo 100-6150 (JP); HANAKI, Akihito, Tokyo 100-6150 (JP); TAKAGI, Yukiko, Tokyo 100-6150 (JP)
(74) Representative: HOFFMANN EITLE
(86) International application number: PCT/JP2009/071787
(87) International publication number: WO 2010/079721

(57) **Abstract**

A BTS 100 includes a MAC-hs processing unit configured to determine if the priority of a communication to be executed for the communication request received is equal to or higher than a predetermined priority, and a HARQ process control unit 121 configured to assign a priority communication to be executed for the communication request to the retransmission processes in preference to other communications if the determination unit determines that the priority is equal to or higher than the predetermined priority. In a case where all the retransmission processes are occupied by the other communications, the HARQ process control unit 121 discards some of the packets stored in a HARQ buffer, based on the number of the retransmission processes required for executing the priority communication.

## Description

### TECHNICAL FIELD

The present invention relates to a communication device and a communication method for controlling packet retransmission by using an automatic repeat request.

### BACKGROUND ART

High Speed Downlink Packet Access (HSDPA), which is a downlink high-speed packet communication technique standardized by the 3rd Generation Partnership Project (3GPP), uses a hybrid automatic repeat request (HARQ) for communications between a radio base station (BTS) and user equipment (UE).

The HARQ is a technique that improves an error correction capability during packet retransmission to reduce the number of packet retransmissions by combining an automatic repeat request (ARQ) with an error correction. The HSDPA uses a so-called Stop-and-Wait HARQ with which Ack (acknowledgement) or Nack (negative acknowledgement) is checked packet by packet to determine if retransmission is required. The BTS can concurrently process HARQ processes for up to six channels per UE (N-channel Stop-and-Wait mode). Different communications, such as a dedicated control channel (DCCH), a data communication, and a voice call can be assigned to HARQ processes, respectively.

In addition, if HARQ is used, a buffer (hereinafter, HARQ buffer) which temporarily stores packets in preparation for retransmission is essential. In order to reduce a necessary size of the HARQ buffer, there has been known a method of removing a header added to a packet and then storing data contained in the packet in the HARQ buffer (for example, patent literature 1) .

### PRIOR ART DOCUMENT

### PATENT DOCUMENT

Patent Document 1: JP-A 2005-318429 (pp. 9 and 10, Fig. 3)

### SUMMARY OF THE INVENTION

### PROBLEMS TO BE SOLVED BY THE INVENTION

In the case of using HARQ, many packets are retained in a HARQ buffer when BTS cannot receive ACK from UE for a long time period due to deterioration of a quality of a communication path, in other words, communications between BTS and UE.

Specifically, the HARQ buffer assigned to each HARQ process is filled with the packets. As a result, packets for other communications, in particular, communications with a higher priority, for example, DCCH or voice call, cannot be assigned to the HARQ processes. Thus, this causes a problem that the packets cannot be transmitted from BTS to UE.

For this reason, the present invention has been made in view of the aforementioned circumstances. Accordingly, an objective of the present invention is to provide a communication device and a communication method which are capable of, using an automatic repeat request, more quickly transmitting packets for a communication with a higher priority even in the case where the communication quality of a communication path is deteriorated.

### MEANS FOR SOLVING THE PROBLEMS

To solve the aforementioned problem, the present invention has the following features. First of all, a first feature of the present invention is a communication device (BTS 100) that uses an automatic repeat request for transmitting and retransmitting packets (packets P) each containing data by checking for each packet an acknowledgement (Ack) indicating that the packet is normally received or a negative acknowledgement (Nack) indicating that the packet is not normally received, and is capable of concurrently executing a plurality of retransmission processes (HARQ processes) in processing units of the automatic repeat request for a destination (for example, UE 201) of the packets, the communication device comprising: a retransmission buffer (HARQ buffer 123) configured to store the packets in units of the retransmission processes; a request receiving unit (MAC-hs processing unit 120) configured to receive a communication request for the destination; a determination unit (MAC-hs processing unit 120) configured to determine if the priority of a communication to be executed for the communication request received by the request receiving unit is equal to or higher than a predetermined priority; and a process control unit (HARQ process control unit 121) configured to assign a priority communication to be executed for the communication request to the retransmission processes in preference to other communications if the determination unit determines that the priority is equal to or higher than the predetermined priority, wherein in the case where all the retransmission processes are occupied by the other communications, the process control unit discards some of the packets stored in the retransmission buffer, based on the number of the retransmission processes (for example, two channels) required for executing the priority communication.

The above communication device discards some of the packets stored in the retransmission buffer based on the number of the retransmission processes required for executing the priority communication in the case where all the retransmission processes are occupied. Accordingly, the priority communication can be immediately executed using the retransmission process which now has a space by discarding the packet.

In other words, using the automatic repeat request, the communication device can immediately transmit the packets for a communication with a higher priority to a destination even in the case where the communication quality of a radio section is deteriorated.

A second feature of the present invention is dependent on the first feature of the present invention, and includes an upper retransmission unit (RLC processing unit 140) provided in an upper layer (RLC layer) than a layer where the retransmission processes are executed and configured to retransmit the data to the destination.

A third feature of the present invention is dependent on the first feature of the present invention and is as follows. The automatic repeat request is a hybrid automatic repeat request including an error correction of the data using error correction code.

A fourth feature of the present invention is dependent on the first feature of the present invention, and is as follows. The determination unit determines if the priority of a communication to be executed for the communication request received by the request receiving unit is higher than the priority of a packet stored in the retransmission buffer. The process control unit transmits the packet stored in the retransmission buffer if the priority of the packet stored in the retransmission buffer is higher than the priority of the communication to be executed for the communication request.

A fifth feature of the present invention is dependent on the first feature of the present invention, and is as follows. If a packet stored in the retransmission buffer is discarded, the process control unit notifies a destination of the discarded packet that a new packet is transmitted instead of the discarded packet.

A sixth feature of the present invention is a communication device (BTS 100) which uses an automatic repeat request for transmitting and retransmitting packets (packets P) each containing data by checking for each packet an acknowledgement (Ack) indicating that the packet is normally received or a negative acknowledgement (Nack) indicating that the packet is not normally received, and is capable of concurrently executing a plurality of retransmission processes (HARQ processes) in processing units of the automatic repeat request for a destination (for example, UE 201) of the packets, the communication device comprising: a retransmission buffer (HARQ buffer 123) configured to store the packets in units of the retransmission processes; a request receiving unit (MAC-hs processing unit 120) configured to receive a communication request for the destination; a determination unit (MAC-hs processing unit 120) configured to determine if the priority of a communication to be executed for the communication request received by the request receiving unit is equal to or higher than a predetermined priority; and a process control unit (HARQ process control unit 121) configured to assign a priority communication to be executed for the communication request to the retransmission processes in preference to other communications if the determination unit determines that the priority is equal to or higher than the predetermined priority, wherein in the case where all the retransmission processes are occupied by other communications, the process control unit returns the data contained in some of the packets stored in the retransmission buffer, to an upper layer (MAC-d layer) than a layer where the retransmission processes are executed, based on the number of the retransmission processes required for executing the priority communication.

The above communication device returns the data contained in some of the packet stored in the retransmission buffer based on the number of the retransmission processes required for executing the priority communication, to the upper layer than the layer where the retransmission processes are executed in the case where all the retransmission processes are occupied. Accordingly, the priority communication can be quickly executed using the retransmission process which now has a space by returning the data to the upper layer.

In other words, using the automatic repeat request, the communication device can immediately transmit the packets for a communication with a higher priority to a destination even in the case where the communication quality of a radio section is deteriorated.

A seventh feature of the present invention is dependent on the sixth feature of the present invention, and includes an upper layer buffer (MAC-d buffer 131) provided in the upper layer and configured to temperately store the data returned by the process control unit.

An eighth feature of the present invention is dependent on the sixth feature of the present invention, and is as follows. The automatic repeat request is a hybrid automatic repeat request including an error correction of the data using error correction code.

A ninth feature of the present invention is dependent on the sixth feature of the present invention, and is as follows. The determination unit determines if the priority of a communication to be executed for the communication request received by the request receiving unit is higher than the priority of a packet stored in the retransmission buffer. The process control unit transmits the packet stored in the retransmission buffer if the priority of the packet stored in the retransmission buffer is higher than the priority of the communication to be executed for the communication request.

A tenth feature of the present invention is dependent on the sixth feature of the present invention, and is as follows. If a packet stored in the retransmission buffer is discarded, the process control unit notifies a destination of the discarded packet that a new packet is transmitted instead of the discarded packet.

An eleventh feature of the present invention is a communication method which uses an automatic repeat request for transmitting and retransmitting packets each containing data by checking for each packet an acknowledgement indicating that the packet is normally received or a negative acknowledgement indicating that the packet is not normally received, and is capable of concurrently executing a plurality of retransmission processes in processing units of the automatic repeat request for a destination of the packets for a destination of the packets, the communication method comprising the steps of: storing the packets in units of the retransmission processes; receiving a communication request for the destination; determining if the priority of a communication to be executed for the received communication request is equal to or higher than a predetermined priority; and assigning a priority communication to be executed for the communication request to the retransmission processes in preference to other communications if it is determined that the priority is equal to or higher than the predetermined priority, wherein the assigning step to the retransmission processes includes discarding some of the packets stored in the retransmission buffer, based on the number of the retransmission processes required for executing the priority communication in the case where all the retransmission processes are occupied by the other communications.

A twelfth feature of the present invention is a communication method which uses an automatic repeat request for transmitting and retransmitting packets each containing data by checking for each packet an acknowledgement indicating that the packet is normally received or a negative acknowledgement indicating that the packet is not normally received, and is capable of concurrently executing a plurality of retransmission processes in processing units of the automatic repeat request for a destination of the packets for a destination of the packets, the communication method comprising the steps of: storing the packets in units of the retransmission processes; receiving a communication request for the destination; and determining if the priority of a communication to be executed for the received communication request is equal to or higher than a predetermined priority; assigning a priority communication to be executed for the communication request to the retransmission processes in preference to other communications if it is determined that the priority is equal to or higher than the predetermined priority, wherein the assigning step to the retransmission processes includes returning data contained in some of the packets stored in the retransmission buffer, based on the number of the retransmission processes required for executing the priority communication, to an upper layer than a layer where the retransmission processes are executed, in the case where all the retransmission processes are occupied by other communications.

### EFFECTS OF THE INVENTION

According to the features of the present invention, it is possible to provide a communication device and a communication method which are capable of, using an automatic repeat request, more quickly transmitting packets for a communication with a higher priority to a destination even in the case where the communication quality of a radio section is deteriorated.

### BRIEF DESCRIPTION OF THE DRAWINGS

[Fig. 1] Fig. 1 is an overall schematic configuration diagram of a radio communication system 1 according to an embodiment of the invention.
[Fig. 2] Fig. 2 is a functional block configuration diagram of a BTS 100 according to the embodiment of the present invention.
[Fig. 3] Fig. 3 is a drawing illustrating an operational flow of the BTS 100 according to a first embodiment of the present invention.
[Fig. 4] Fig. 4 is a drawing illustrating a protocol stack which is used in the radio communication system 1 according to the embodiment of the present invention.
[Fig. 5] Fig. 5 is a drawing illustrating an outline of packet retransmission operation performed by an N-channel Stop-and-Wait HARQ mode according to the embodiment of the present invention.
[Fig. 6] Fig. 6 is a drawing illustrating an example of using a HARQ buffer 123 according to the embodiment of the present invention.
[Fig. 7] Fig. 7 is a drawing illustrating an example of a discarding operation on packets P performed by a HARQ process control unit 121 according to the first embodiment of the present invention.
[Fig. 8] Fig. 8 is a drawing illustrating an operational flow of a BTS 100 according to a second embodiment of the present invention.
[Fig. 9] Fig. 9 is a drawing illustrating an example of a return of packets P to a MAC-d layer, which is performed by a HARQ process control unit 121 according to the second embodiment of the present invention.

### MODES FOR CARRYING OUT THE INVENTION

Hereinafter, an embodiment of the present invention is described. Specifically, the description is given of (1) First Embodiment, (2) Second Embodiment, and (3) Other Embodiments.

Note that, in the following description of the drawings, same or similar reference numerals are given to denote same or similar portions. It should be noted, however, that the drawings are merely schematically shown and proportions of sizes and the like are different from actual ones.

Accordingly, specific sizes and the like should be judged by referring to the description below. In addition, there are of course included portions where relationships or percentages of sizes of the drawings are different with respect to one another.

### (1) First Embodiment

In the first embodiment, the descriptions are given of (1.1) Outline of Radio Communication System, (1.2) Functional Block Configuration of Communication Device, (1.3) Operation of Communication Device, and (1.4) Advantageous Effects.

### (1.1) Outline of Radio Communication System

### (1.1.1) Overall schematic configuration

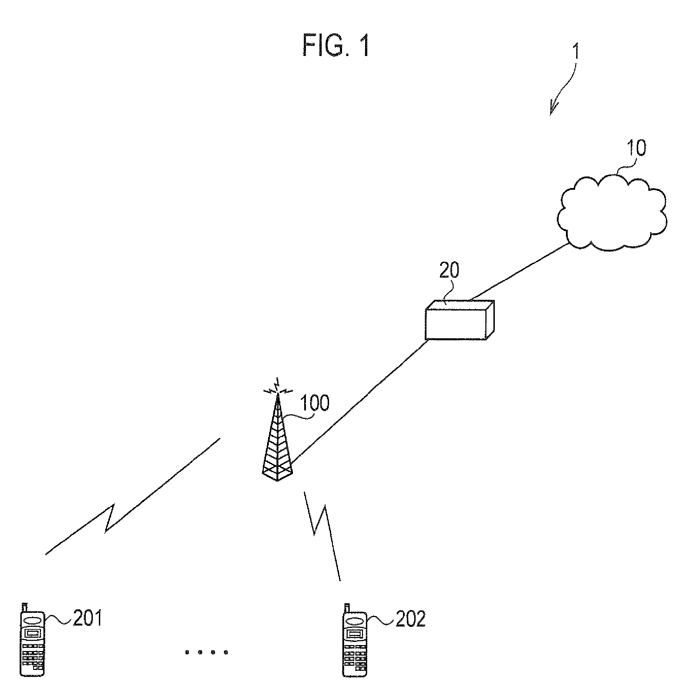

Fig. 1 is an overall schematic configuration diagram of a radio communication system 1 according to the present embodiment. As shown in Fig. 1, the radio communication system 1 includes a core network 10, a radio network controller 20 (hereinafter, RNC 20), a radio base station 100 (hereinafter, BTS 100), user equipments 201, 202 (hereinafter, UE 201, 202) . Note that the numbers of the RNCs, BTSs, and UEs included in the radio communication system 1 are not limited to the numbers shown in Fig. 1.

In the radio communication system 1, a radio communication according to the W-CDMA mode and related processing are executed. Also, the present embodiment uses High Speed Downlink Packet Access (HSDPA) which is a downlink high-speed packet communication technique standardized by the 3GPP.

The core network 10 is configured of a packet switching domain configured of a packet-switching communication network (IP network), a circuit switching domain configured of a circuit-switching communication network, and the like.

The RNC 20 is connected to the core network 10 and the BTS 100. The RNC 20 has a function to process various kinds of control signals, an operation and maintenance function, a function to demultiplex a common channel, and the like.

The BTS 100 executes a radio communication with the UEs 201, 201 according to the W-CDMA mode and HSDPA. In the present embodiment, the BTS100 constitutes a communication device. Used between the BTS 100 and the UEs 201, 202 is a hybrid automatic repeat request (HQRA) in which an automatic repeat request (ARQ) is combined with a data error correction using error correction code.

### (1.1.2) Protocol Stack

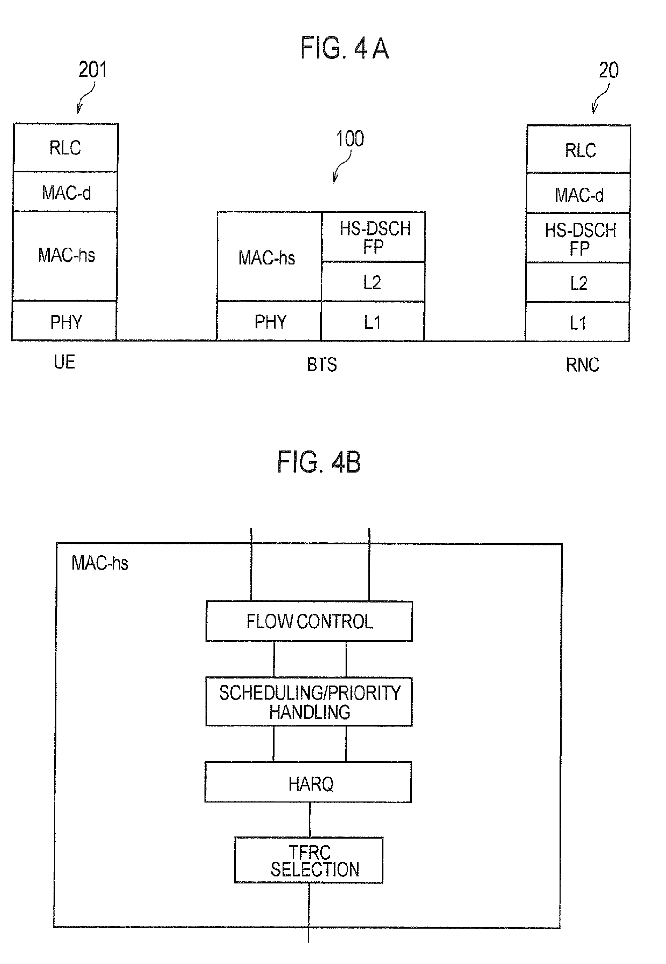

Fig. 4(a) shows a protocol stack which is used in the radio communication system 1. As shown in Fig. 4(a), the UE201 uses a PHY layer, Mac-hs layer, MAC-d layer, and RLC layer. In contrast with the UE201, the BTS 100 uses a PHY layer and a Mac-hs layer. The HARQ control and BTS scheduling to select a UE to be assigned according to a radio status with the UE are executed in the Mac-hs layer between the BTS 100 and the UE 201. In addition, the BTS 100 uses L1, L2 and an HS-DSCH FP (Flame Protocol) layer with respect to the RNC 20.

Moreover, Fig. 4(b) is a drawing schematically illustrating a function of the Mac-hs layer. As shown in Fig. 4(b), the Mac-hs layer includes functions of Flow Control, Scheduling/Priority Handling, HARQ, and Transport Format and Resource Combination (TFRC) Selection.

### (1.2) Functional Block Configuration of Communication Device

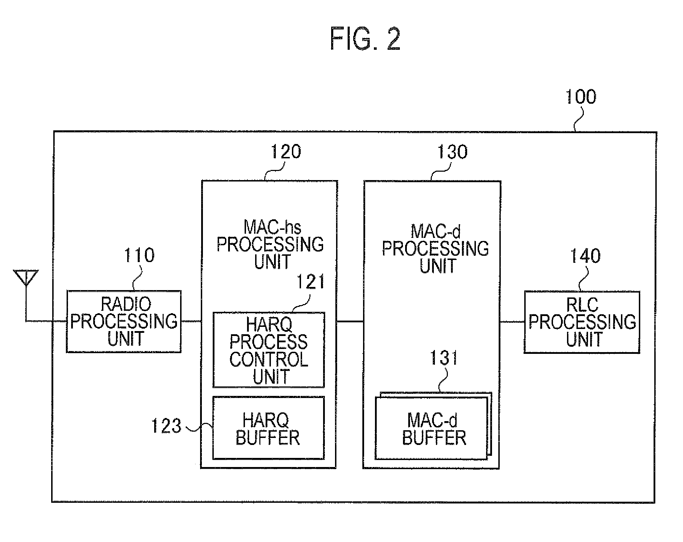

Fig. 2 is a functional block configuration diagram of the BTS 100 configuring a communication device in the present embodiment. As shown in Fig. 2, the BTS 100 includes a radio processing unit 110, a MAC-hs processing unit 120, a MAC-d processing unit 130, and a RLC processing unit 140. Note that in the following, the description is mainly given of portions relating to the present invention. Accordingly, it should be noted that there may be a case where the BTS 100 includes a block (such as a power source unit) which is necessary to achieve a function as a BTS 100 but is not shown or is not described.

The radio processing unit 100 transmits/receives a radio signal to/from the UEs 201, 201. Specifically, the radio processing unit 110 executes digital modulation and demodulation processing, signal amplification processing, and the like.

The MAC-hs processing unit 120 executes processing in the Mac-hs layer (see Fig. 4(a)). Specifically, the MAC-hs processing unit 120 provides HARQ or a TFRC Selection function (see Fig. 4(b)), and the like.

The MAC-hs processing unit 120 executes processing according to the N-channel Stop-and-Wait HARQ. The MAC-hs processing unit 120 can concurrently perform HARQ processes (retransmission processes) on up to six channels per UE. Specifically, this processing is executed by a HARQ process control unit 121 and a HARQ buffer 123 to be described later.

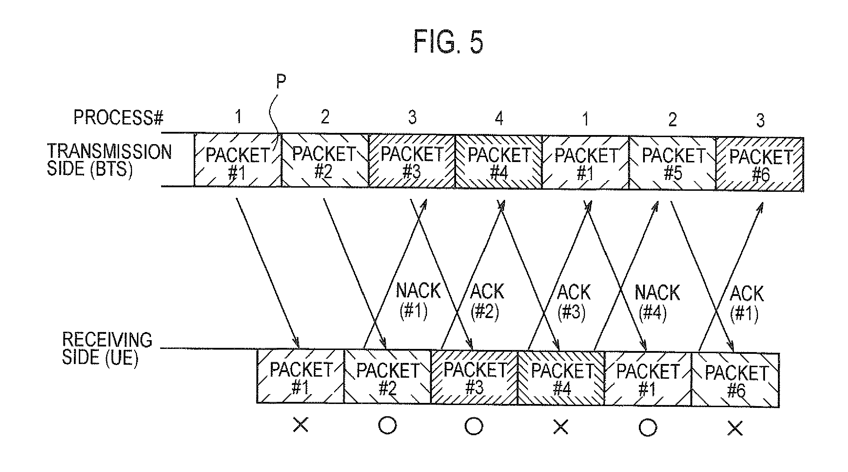

Fig. 5 shows an operational overview of packet retransmission according to the N-channel Stop-and-Wait HARQ. In the present embodiment, packets P are transmitted or retransmitted by checking packet by packet Ack (acknowledgement) indicating that the packet P containing data such as user data and control data is normally received or Nack (negative acknowledgement) indicating that the packet P is not received normally.

The HARQ process is a processing unit of ARQ for a destination of the packets P (for example, UE 201). In the example shown in Fig. 5, HARQ processes for four channels (processes) are concurrently executed. However, in HSDPA, the BTS 100 can concurrently execute HARQ processes for up to six channels with a specific UE.

In addition, in the present embodiment, the MAC-hs processing unit 120 accepts a communication request for the destination (for example, UE 201). Specifically, the MAC-hs processing unit 120 accepts a communication request of a data communication, a voice call, or a dedicated control channel (DCCH) from the RNC 20. In the present embodiment, the MAC-hs processing unit 120 constitutes a request accepting unit.

The MAC-hs processing unit 120 determines if the priority of the communication to be executed for the received communication request is equal to or higher than a predetermined priority. In the present embodiment, the MAC-hs processing unit 120 constitutes a determination unit. In the present embodiment, the voice call and DCCH are set to have a higher priority than a regular data communication.

In addition, the MAC-hs processing unit 120 determines if the priority of the communication to be executed for the received communication request is higher than the priority of the packet P stored in the HARQ buffer 123.

The HARQ process control unit 121 controls a HARQ process. Specifically, the HARQ process control unit 121 simultaneously and concurrently controls the HARQ processes of up to six channels (processes) per UE according to the Stop-and-Wait mode. In the present embodiment, the HARQ process control unit 121 constitutes a process control unit.

The HARQ buffer 123 stores the packet P by using the HARQ process as a unit according to the control of the HARQ process control unit 121. In the present embodiment, the HARQ buffer 123 constitutes a retransmission buffer.

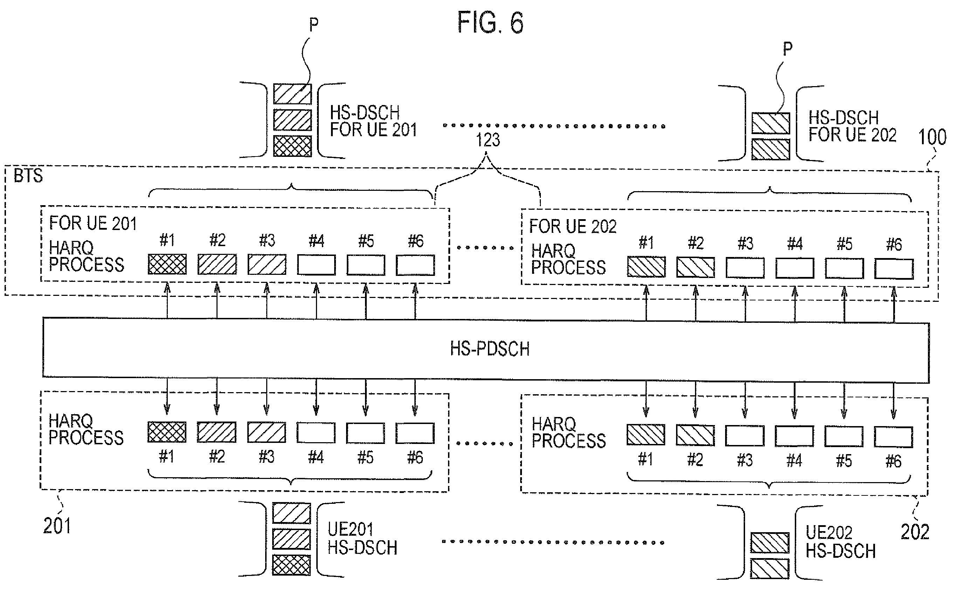

Fig. 6 shows an example of using the HARQ buffer 123. As shown in Fig. 6, the BTS 100 uses the HARQ buffer 123 to concurrently process the HARQ processes of six channels (#1 to #6) for the UE 201. Similarly, the BTS 100 also uses the HARQ buffer 123 to concurrently process the HARQ processes of six channels (#1 to #6) for the UE 202.

In the example shown in Fig. 6, a communication, specifically, a High Speed-Downlink Shared Channel (HS-DSCH) which is a transport channel is assigned to the HARQ processes #1 to #3 among all the HARQ processes for the UE201. Similarly, the HS-DSCH is assigned to the HARQ processes ##1, #2 among all the HARQ processes for the UE 202.

The packet P stored in the HARQ buffer 123 for every HARQ process is transmitted to each UE through a High Speed-Physical Downlink Shared Channel (HS-PDSCH) as MAC-hs PDU. Note that a UE identifier (UE-ID) and a HARQ process ID are transmitted by the Shared Control Channel for HS-DSCH (HS-SCCH) to each UE.

When the MAC-hs processing unit 120 determines that the priority of the communication to be executed for the received communication request is equal to or higher than the predetermined priority, the HARQ process control unit 121 assigns the priority communication to be executed for the communication request (for example, DCCH establishment) to the HARQ processes in preference to other communications (for example, data communication).

In the case where all the HARQ processes, in other words, a packet storing region in the HARQ buffer 123 is occupied by other communications, the HARQ process control unit 121 discards the packet P stored in the HARQ buffer 123, specifically MAC-hs PDU, among the packets P stored in the HARQ buffer 123, based on the number of HARQ processes (for example, two channels) required for execution of the priority communication.

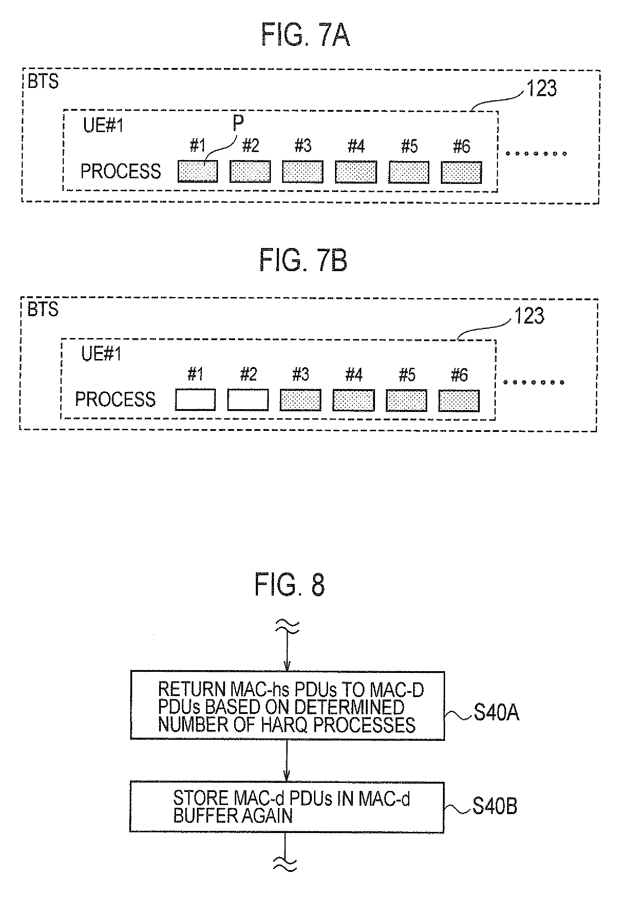

Figs. 7(a) and 7(b) shows an operational example of discarding the packet P by the HARQ process control unit 121. As shown in Fig. 7(a), in the case where all the HARQ processes are occupied by other communications, the HARQ process control unit 121 determines the number of HARQ processes (for example, two channels) required for executing the priority communication. Furthermore, the HARQ process control unit 121 discards the packet P stored in the HARQ buffer123 based on the number of the determined HARQ processes. Fig. 7(b) shows a state where the packets P stored in the HARQ buffer 123 for the HARQ processes #1, #2 are discarded and a space is produced in the HARQ buffer 123.

The HARQ process control unit 121 assigns the priority communication to the HARQ processes #1, #2 in which a space is produced by discarding the packets P.

When the packet P stored in the HARQ buffer 123 is discarded, the HARQ process control unit 121 notifies the destination (for example, UE 201) of the discarded packet P that a new packet P is transmitted in place of the packets P.

In addition, when the priority of the packet P stored in the HARQ buffer 123 is higher than the priority of the communication to be executed for the received communication request, the HARQ process control unit 121 can also transmit the packet P stored in the HARQ buffer 123.

The MAC-d processing unit 130 executes processing relating to the MAC-d layer in the Mac-hs layer. Specifically, the MAC-d processing unit 130 provides a Flow Control Function and a Scheduling/Priority Handling function (Fig. 4(b)). In addition, the MAC-d processing unit 130 includes a MAC-d buffer 131 which temporarily stores data, specifically, MAC-d PDU to be transmitted to UE.

The RLC processing unit 140 executes processing in the RLC layer positioned above the MAC-d layer. In particular, in the present embodiment, the RLC processing unit 140 executes retransmission of data included in the packet P to a destination (for example, UE 201) in the RLC layer which is an upper layer than the Mac-hs layer in which the HARQ process is executed. In the present embodiment, the RLC processing unit 140 constitutes an upper retransmission unit.

Specifically, the RLC processing unit 140 retransmits data (PDU) contained in the packet discarded by the HARQ process control unit 121 for preferentially executing the communication. The data retransmitted by the RLC processing unit 140 is retransmitted to a destination through the MAC-d processing unit 130 and the MAC-hs processing unit 120.

### (1.3) Operation of Communication Device

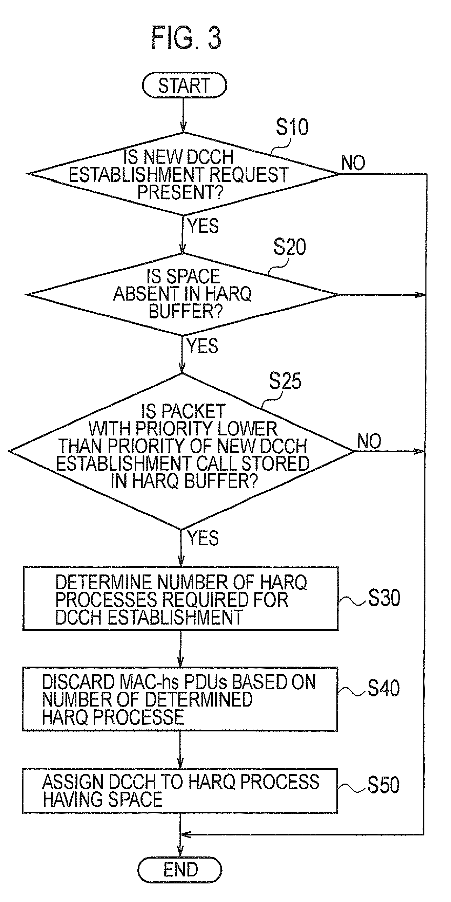

Fig. 3 illustrates an operational flow of BTS 100 configuring a communication device in the present embodiment. Specifically, Fig. 3 illustrates the operational flow that the BTS 100 executes a priority communication (for example, DCCH establishment) in the case where a packet storing region in the HARQ buffer 123 is occupied by other communications.

As shown in Fig. 3, at step S10, the BTS 100 checks if a new DCCH establishment request is present or not. Note that the description is given here by taking DCCH as an example, but the BTS 100 equally operates as long as the priority of a priority communication to be executed for a communication request, such as a voice call, is equal to or higher than a predetermined priority.

If DCCH establishment is newly requested (YES at step S10), at step S20, the BTS 100 determines if a space is absent in the HARQ buffer.

If a space is absent in the HARQ buffer 123 (YES at step S20), at step S25, the BTS 100 determines if the HARQ buffer 123 stores a packet P whose priority is lower than that of a new DCCH-establishment call.

If the HARQ buffer 123 stores a packet P whose priority is lower than that of a new DCCH-establishment call (YES at step S25), at step S30, the BTS 100 determines the number of HARQ processes (for example, two channels) required for DCCH establishment. At step S30, the HARQ buffer 123 is in a state shown in Fig. 7(a). In other words, the packet storing region of the HARQ buffer 123 is occupied by other communications.

At step S40, the BTS 100 discards the packets P, specifically, MAC-hs PDUs, corresponding to the number of the determined HARQ processes. When the processing at step S40 is completed, the HARQ buffer 123 is in a state shown in Fig. 7(b).

At step S50, the BTS 100 assigns DCCH to the HARQ process having a space by discarding the MAC-hs PDUs. In addition, the BTS 100 notifies a destination of the discarded packets P (for example, UE 201) that the discarded packets P are not retransmitted but new packets P are transmitted.

### (1.4) Advantageous Effects

In the case where all the HARQ processes are occupied, the BTS 100 according to the present embodiment discards the packets P stored in the HARQ buffer 123 based on the number of the HARQ processes required for executing a priority communication. Accordingly, the priority communication can be immediately executed using the HARQ process which has a space by discarding the packets P.

In other words, the BTS 100 using ARQ can more quickly transmits the packets P for a communication with a higher priority to a destination even in the case where the communication quality of a radio section is deteriorated.

In the present embodiment, data is retransmitted to a destination in the RLC layer. For this reason, even if the packet P is discarded in the Mac-hs layer to execute the priority communication, data contained in the discarded packet P is securely transmitted to the destination.

The present embodiment uses HARQ in which ARQ and a data error correction using error correction code are combined. According, even in the case where the communication quality of a radio section is deteriorated, the packets P for the priority communication can be more securely transmitted to a destination.

### (2) Second Embodiment

Hereinafter, a second embodiment of the present invention is described. In the present embodiment, in place of discarding a packet P (MAC-hs PDU) stored in a HARQ buffer 123, a BTS 100 executes an operation of returning the packet P to an upper layer. In the following description, portions different from the aforementioned first embodiment is mainly described.

### (2.1) Operation of Communication Device

The functional block configuration of the BTS 100 (communication device) according to the present embodiment is similar to that of the first embodiment (see, Fig. 2). On the other hand, a difference lies in an operation that the BTS 100 executes a priority communication (for example, DCCH establishment) in the case where a packet storing region in the HARQ buffer 123 is occupied by other communications.

The BTS 100 executes processing at steps S40A and S40B shown in Fig. 8 in place of the processing at step S40 shown in Fig. 3. As shown in Fig. 8, at step S40A, the BTS 100 returns the packet P, specifically, MAC-hs PDU to MAC-d PDU based on the number of the determined HARQ processes.

In other words, in the present embodiment, in the case where all the HARQ processes are occupied by other communications, the HARQ process control unit 121 of the BTS 100 returns data contained in the packet P stored in the HARQ buffer 123 to the MAC-d layer in an upper layer than a layer where HARQ process is executed based on the number of HARQ processes required for DCCH establishment (priority communication).

More specifically, a packet P is buffered in the form of MAC-d PDU within a queue (MAC-d buffer 131) of a Scheduling/Priority Handling function shown in Fig. 4(b). The HARQ function shown in Fig. 4(b) converts the MAC-d PDU to MAC-hs PDU. In a case where all the HARQ processes are occupied by other communications, the HARQ function returns the converted MAC-hs PDU into the MAC-d PDU within the queue (MAC-d buffer 131) of the Scheduling/Priority Handling function based on the number of the HARQ processes required for DCCH establishment.

At step S40B, the BTS 100 (MAC-d processing unit 130) stores the MAC-d PDU which is returned by the HARQ process control unit 121 in the MAC-d buffer 131. In the present embodiment, the MAC-d buffer 131 constitutes an upper layer buffer.

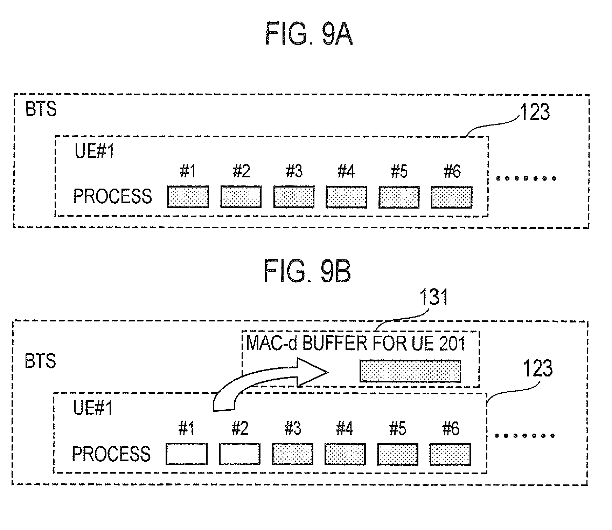

Figs. 9(a) and 9(b) illustrate an example that the HARQ process control unit 121 returns the packet P to the MAC-d layer.

Similar to Fig. 7(a), Fig. 9(a) illustrates a state where all the HARQ processes are occupied by other communications. The HARQ process control unit 121 determines the number of HARQ processes required for executing DCCH establishment. Furthermore, the HARQ process control unit 121 returns the packet P (MAC-hs PDU) stored in the HARQ buffer123 to the MAC-d layer based on the number of the determined HARQ processes. Specifically, the HARQ process control unit 121 returns the MAC-hs PDU to the MAC-d PDU.

Fig. 9(b) illustrates a state where the packet P (MAC-hs PDU) stored in the HARQ buffer 123 for the HARQ processes #1, #2 is returned to the MAC-d layer and a space is produced in the HARQ buffer 123.

At step S50, the BTS 100 assigns DCCH to the HARQ process which has a space.

Note that the data returned from the MAC-hs PDU to the MAC-d PDU is transmitted again to a destination through the MAC-d processing unit 130, the MAC-hs processing unit 120.

### (2.2) Advantageous Effects

In a case where all the HARQ processes are occupied, the BTS 100 according to the present embodiment returns the data contained in the packet P stored in the HARQ buffer 123 to the MAC-d layer in an upper layer than a layer where HARQ process is executed based on the number of the HARQ processes required for executing the priority communication. Accordingly, the priority communication can be immediately executed using the HARQ process which has a space by returning the data to the MAC-d layer.

In other words, the BTS 100 using ARQ can more quickly transmit the packet P relating to a communication with a higher priority to a destination in the case where the communication quality of a radio section is deteriorated.

The present embodiment includes the MAC-d buffer 131 which temporarily stores data returned by the HARQ process control unit 121 in the MAC-d layer. For this reason, even if the data is returned to the MAC-d layer for executing the priority communication, the data is not lost and thus can be securely transmitted to a destination.

### (3) Other Embodiments

As described above, the contents of the present invention have been disclosed through the first and second embodiments. However, it should not be understood that the description and the drawings, which constitute one part of this disclosure, are to limit the present invention. Various alternative embodiments will be obvious for those who are in the art from this disclosure.

For example, in both of the aforementioned embodiments, the packets P (data) stored in the HARQ buffer 123 are discarded or returned to an upper layer based on the number of HARQ processes required for executing the priority communication. However, a volume of the packets P (data) discarded or returned to an upper layer is not necessarily based on the number of the HARQ processes required for executing the priority communication. For example, it may be designed that packets P (data) for a predetermined number of HARQ processes, which is a relatively large number (for example, three channels), be discard or returned to an upper layer.

In the aforementioned embodiments, the description is given as an example by using an HSDPA which is a downlink high-speed packet communication technique. However, the present invention may be applied to Enhanced Up Link (EUL) which is an uplink high-speed packet communication technique.

In both of the aforementioned embodiments, HARQ is used. However, not HARQ but a general ARQ which does not use an error correction may be also used. In addition, in both of the aforementioned embodiments, the description is given by using the radio communication system as an example. However, the present invention is not limitedly applied to the radio communication system, but may of course be applied to a cable communication system.

It is natural that the present invention includes various embodiments which are not described herein. Accordingly, the technical scope of the present invention is defined only by specific matters of the invention appropriate from the scope of claims based on the above description. Note that the contents of Japanese Patent Application No. 2009-002924 (filed on January 8, 2009) are incorporated herein by reference in their entirety.

### INDUSTRIAL APPLICABILITY

As described above, using an automatic repeat request, a communication device and a communication method according to the present invention can more immediately transmit packets for a communication with a higher priority even in the case where the communication quality of a communication path is deteriorated.

## Claims

1. A communication device which uses an automatic repeat request for transmitting and retransmitting packets each containing data by checking for each packet an acknowledgement indicating that the packet is normally received or a negative acknowledgement indicating that the packet is not normally received, and is capable of concurrently executing a plurality of retransmission processes in processing units of the automatic repeat request for a destination of the packets, the communication device comprising:
a retransmission buffer configured to store the packets in units of the retransmission processes;
a request receiving unit configured to receive a communication request for the destination;
a determination unit configured to determine if the priority of a communication to be executed for the communication request received by the request receiving unit is equal to or higher than a predetermined priority; and
a process control unit configured to assign a priority communication to be executed for the communication request to the retransmission processes in preference to other communications if the determination unit determines that the priority is equal to or higher than the predetermined priority, wherein
in a case where all the retransmission processes are occupied by the other communications, the process control unit discards some of the packets stored in the retransmission buffer, based on the number of the retransmission processes required for executing the priority communication.

2. The communication device according to claim 1, comprising an upper retransmission unit provided in an upper layer than a layer where the retransmission processes are executed and configured to retransmit the data to the destination.

3. The communication device according to claim 1, wherein the automatic repeat request is a hybrid automatic repeat request including an error correction of the data using error correction code.

4. The communication device according to claim 1, wherein the determination unit determines if the priority of the communication to be executed for the communication request received by the request receiving unit is higher than the priority of a packet stored in the retransmission buffer, and the process control unit transmits the packet stored in the retransmission buffer if the priority of the packet stored in the retransmission buffer is higher than the priority of the communication to be executed for the communication request.

5. The communication device according to claim 1, wherein if a packet stored in the retransmission buffer is discarded, the process control unit notifies a destination of the discarded packet that a new packet is transmitted instead of the discarded packet.

6. A communication device which uses an automatic repeat request for transmitting and retransmitting packets each containing data by checking for each packet an acknowledgement indicating that the packet is normally received or a negative acknowledgement indicating that the packet is not normally received, and is capable of concurrently executing a plurality of retransmission processes in processing units of the automatic repeat request for a destination of the packets, the communication device comprising:
a retransmission buffer configured to store the packets in units of the retransmission processes;
a request receiving unit configured to receive a communication request for the destination;
a determination unit configured to determine if the priority of a communication to be executed for the communication request received by the request receiving unit is equal to or higher than a predetermined priority;
a process control unit configured to assign a priority communication to be executed for the communication request to the retransmission processes in preference to other communications if the determination unit determines that the priority is equal to or higher than the predetermined priority, wherein
in a case where all the retransmission processes are occupied by other communications, the process control unit returns data contained in some of the packets stored in the retransmission buffer, to an upper layer than a layer where the retransmission processes are executed, based on the number of the retransmission processes required for executing the priority communication.

7. The communication device according to claim 6, comprising an upper layer buffer configured to temperately store the data returned by the process control unit in the upper layer.

8. The communication device according to claim 6, wherein the automatic repeat request is a hybrid automatic repeat request including an error correction of the data using error correction code.

9. The communication device according to claim 6, wherein the determination unit determines if the priority of a communication to be executed for the communication request received by the request receiving unit is higher than the priority of a packet stored in the retransmission buffer, and the process control unit transmits the packet stored in the retransmission buffer if the priority of the packet stored in the retransmission buffer is higher than the priority of the communication to be executed for the communication request.

10. The communication device according to claim 6, wherein if the packet stored in the retransmission buffer is discarded, the process control unit notifies a destination of the discarded packet that a new packet is transmitted instead of the discarded packet.

11. A communication method which uses an automatic repeat request for transmitting and retransmitting packets each containing data by checking for each packet an acknowledgement indicating that the packet is normally received or a negative acknowledgement indicating that the packet is not normally received, and is capable of concurrently executing a plurality of retransmission processes in processing units of the automatic repeat request for a destination of the packets for a destination of the packets, the communication method comprising the steps of:
storing the packets in units of the retransmission processes;
receiving a communication request for the destination;
determining if the priority of a communication to be executed for the received communication request is equal to or higher than a predetermined priority; and
assigning a priority communication to be executed for the communication request to the retransmission processes in preference to other communications if it is determined that the priority is equal to or higher than the predetermined priority, wherein
the assigning step to the retransmission processes includes discarding some of the packets stored in the retransmission buffer, based on the number of the retransmission processes required for executing the priority communication in a case where all the retransmission processes are occupied by the other communications.

12. A communication method which uses an automatic repeat request for transmitting and retransmitting packets each containing data by checking for each packet an acknowledgement indicating that the packet is normally received or a negative acknowledgement indicating that the packet is not normally received, and is capable of concurrently executing a plurality of retransmission processes in processing units of the automatic repeat request for a destination of the packets for a destination of the packets, the communication method comprising the steps of:
storing the packets in units of the retransmission processes;
receiving a communication request for the destination;
determining if the priority of a communication to be executed for the received communication request is equal to or higher than a predetermined priority; and
assigning a priority communication to be executed for the communication request to the retransmission processes in preference to other communications if it is determined that the priority is equal to or higher than the predetermined priority, wherein
the assigning step to the retransmission processes includes returning data contained in some of the packets stored in the retransmission buffer, based on the number of the retransmission processes required for executing the priority communication, to an upper layer than a layer where the retransmission processes are executed, in a case where all the retransmission processes are occupied by other communications.
